# EUROPÄISCHE PATENTSCHRIFT

(11) **EP 1 224 102 B1**
(45) Veröffentlichungstag und Bekanntmachung des Hinweises auf die Patenterteilung: **26.10.2005**
(21) Anmeldenummer: 00965850.1
(22) Anmeldetag: 14.09.2000
(51) Int. Cl.: B60T 8/36, H02K 5/22

(54) **ELEKTROHYDRAULISCHES AGGREGAT ZUR REGELUNG EINES BREMSDRUCKS EINER HYDRAULISCHEN FAHRZEUGBREMSANLAGE**
ELECTRO-HYDRAULIC UNIT FOR CONTROLLING THE BREAKING PRESSURE IN A HYDRAULIC BREAKING SYSTEM OF A VEHICLE
UNITE ELECTROHYDRAULIQUE POUR LA REGULATION DE LA PRESSION DE FREINAGE D'UN SYSTEME DE FREINAGE HYDRAULIQUE DE VEHICULE

(30) Priorität: 13.10.1999 DE 19949221
(43) Veröffentlichungstag der Anmeldung: 24.07.2002
(73) Patentinhaber: ROBERT BOSCH GMBH, 70442 Stuttgart (DE)
(72) Erfinder: HENGLER, Robert, 87758 Kardorf (DE); FLUCK, Tobias, 78176 Blumberg (DE)
(86) Internationale Anmeldenummer: PCT/DE2000/003196
(87) Internationale Veröffentlichungsnummer: WO 2001/026945

(56) Entgegenhaltungen:
- EP-A- 0 645 875
- EP-A- 0 921 048
- PATENT ABSTRACTS OF JAPAN vol. 1997, no. 08, 29. August 1997 (1997-08-29) & JP 09 098559 A (JECO CO LTD), 8. April 1997 (1997-04-08)
- PATENT ABSTRACTS OF JAPAN vol. 1999, no. 09, 30. Juli 1999 (1999-07-30) & JP 11 091528 A (UNISIA JECS CORP), 6. April 1999 (1999-04-06)
- PATENT ABSTRACTS OF JAPAN vol. 1996, no. 05, 31. Mai 1996 (1996-05-31) & JP 08 011691 A (AISIN SEIKI CO LTD), 16. Januar 1996 (1996-01-16)

## Beschreibung

### Stand der Technik

Die Erfindung betrifft ein elektrohydraulisches Aggregat zur Regelung eines Bremsdrucks einer hydraulischen Fahrzugbremsanlage mit den Merkmalen des Oberbegriffs des Anspruchs 1. Dabei soll der Begriff Regelung auch eine Steuerung einschließen.

Derartige Aggregate werden verwendet zur Blockierschutzregelung (ABS), zur Antriebsschlupfregelung (ASR), zur Fahrdynamikregelung (FDR) und dgl.. Ein derartiges Aggregat ist bekannt aus der EP 0 921 048 A2. Das bekannte Aggregat weist einen Hydraulikblock, in dem außer anderen hydraulischen Bauelementen wie Magnetventilen eine Hydropumpe untergebracht ist. Die Hydropumpe des bekannten Aggregats ist als Zweikolbenpumpe ausgebildet, wobei jeder Kolben zur Förderung von Bremsflüssigkeit in einem von zwei voneinander unabhängigen Bremskreisen dient. An einer Seite des Hydraulikblocks ist ein Elektromotor zum Antrieb der Hydropumpe angebracht. An einer gegenüberliegenden Seite ist ein elektronisches Steuergerät zur Steuerung des Elektromotors und der Magnetventile am Hydraulikblock angebracht. Zur elektrisch leitenden Verbindung (Kontaktierung) von elektrischen Anschlüssen des Elektromotors mit dem elektronischen Steuergerät ist der Hydraulikblock mit einem Durchgangsloch versehen, welches von der Seite des Hydraulikblocks, an dem das elektronische Steuergerät angebracht ist, zu der Seite, an der der Elektromotor angebracht ist, durchgeht. Durch das Durchgangsloch im Hydraulikblock ist ein elektrischer Kontakt durchgesteckt, der in einem stabförmigen, vorzugsweise rohrförmigen Isolator aufgenommen ist, wobei der Elektromotor über den elektrischen Kontakt elektrisch leitend an das elektronische Steuergerät angeschlossen ist.

### Vorteile der Erfindung

Beim elektrohydraulischen Aggregat mit den Merkmalen des Anspruchs 1 sind der Isolator und der in ihm aufgenommene elektrische Kontakt in seitlicher Richtung beweglich ausgebildet. Die seitliche Beweglichkeit wird vorzugsweise durch eine Elastizität des Isolators und des elektrischen Kontakts erreicht. Durch die seitliche Beweglichkeit des Isolators und des elektrischen Kontakts gleicht das erfindungsgemäße Aggregat Lageungenauigkeiten des Isolators mit dem in ihm aufgenommenen elektrischen Kontakt, die Folge beispielsweise von Herstellungs- und/oder Montageungenauigkeiten sind, in Bezug auf den Hydraulikblock aus. Des weiteren ist der Isolator aufweitbar ausgebildet und er wird erfindungsgemäß von dem in ihm aufgenommenen elektrischen Kontakt so aufgeweitet, daß er spielfrei im Durchgangsloch des Hydraulikblocks anliegt. Auf diese Weise erreicht die Erfindung eine genaue Positionierung des elektrischen Kontakts am Hydraulikblock. Die Erfindung vermeidet eine große Lageungenauigkeit des elektrischen Kontakts in Bezug auf den Hydraulikblock, die ansonsten durch Summierung einer Anzahl von Herstellungs- und Montagetoleranzen auftreten kann. Der elektrische Anschluß des Elektromotors an das elektronische Steuergerät erfolgt in einfacher Weise durch eine Steckverbindung mit dem elektrischen Kontakt, wobei das elektrohydraulische Aggregat durch die genaue Positionierung des elektrischen Kontakts am Hydraulikblock für einen automatisierten Zusammenbau geeignet ist. Gegenüber dem bekannten Aggregat sind keine zusätzlichen Teile notwendig, so daß keine zusätzlichen Herstellungskosten entstehen. Weiterer Vorteil der Erfindung ist, daß der elektrische Kontakt im Hydraulikblock nicht abgedichtet werden muß, da der Elektromotor und das elektronische Steuergerät abgedichtet am Hydraulikblock angebracht sind und sich der elektrische Kontakt innerhalb von mit Dichtungen des Elektromotors und des elektronischen Steuergeräts umschlossenen Flächen befindet. Durch die Steckverbindung zum elektrischen Anschluß des Elektromotors an das elektronische Steuergerät ist ein Austausch sowohl des Steuergeräts als auch des Elektromotors problemlos möglich.

Die Unteransprüche haben vorteilhafte Ausgestaltungen und Weiterbildungen der im Hauptanspruch angegebenen Erfindung zum Gegenstand. In bevorzugter Ausgestaltung gemäß Anspruch 2 verjüngt sich der Isolator in nicht aufgeweitetem Zustand, also ohne den in ihm aufgenommenen elektrischen Kontakt, in Richtung eines freien Endes. Bei rundem Querschnitt verjüngt sich der Isolator konisch, bei eckigem Querschnitt pyramiden- oder keilförmig. Diese Ausgestaltung der Erfindung hat den Vorteil, daß sich der Isolator bei Herstellung als Spritzgießteil aus Kunststoff problemlos aus einem Spritzgießwerkzeug entformen läßt, ohne daß das Spritzgießwerkzeug im Bereich des Isolators geteilt sein muß. Der im Isolator aufgenommene elektrische Kontakt weitet den Isolator vorzugsweise lediglich im Bereich seines freien Endes in entgegengesetzter Richtung soweit auf, daß der Isolator an der Stelle seiner größten Aufweitung einen mindestens ebenso großen Quermesser wie an seiner in nicht aufgeweitetem Zustand größten Stelle. Durch diese Aufweitung ist es möglich, den Isolator in einem Durchgangsloch konstanten Querschnitt im Hydraulikblock im Bereich eines freien Endes des Isolators spielfrei zu halten. Auf seiner übrigen Länge weist der Isolator Spiel im Durchgangsloch im Hydraulikblock auf, so daß er zusammen mit dem in ihm aufgenommenen elektrischen Kontakt seitlich beweglich ist.

Bei einer Ausgestaltung der Erfindung gemäß Anspruch 7 ist die Stecktiefe, um die elektrische Kontakt in einen Gegenkontakt gesteckt wird, nicht begrenzt. Diese Ausgestaltung der Erfindung ergibt einen Ausgleich in Längsrichtung des elektrischen Kontakts zwischen dem elektrischen Kontakt und einem Gegenkontakt, der verschieden dicke Hydraulikblöcke und verschieden hohe elektronische Steuergeräte ausgleicht.

### Zeichnung

Die Erfindung wird nachfolgend anhand eines in der Zeichnung dargestellten Ausführungsbeispiels näher erläutert. Es zeigen:
- Figur 1: ein erfindungsgemäßes, elektrohydraulisches Aggregat im Schnitt;
- Figur 2: eine Bürstenplatte eines Elektromotors des Aggregats aus Figur 1 in perspektivischer Darstellung; und
- Figur 3: einen Querschnitt eines Isolators der Bürstenplatte aus Figur 2.

### Beschreibung des Ausführungsbeispiels

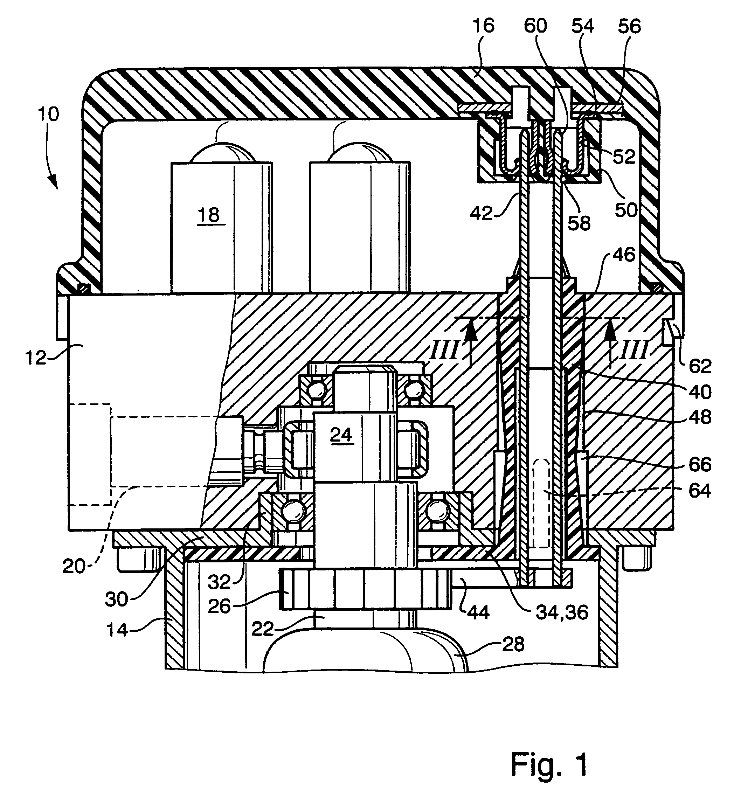

Das in der Zeichnung dargestellte, elektrohydraulische Aggregat 10 ist zur Regelung eines Radbremszylinderdrucks einer im übrigen nicht dargestellten, hydraulischen Fahrzeugbremsanlage vorgesehen. Das Aggregat 10 dient zur Blockierschutzregelung beim Bremsen, zur Antriebsschlupfregelung beim Anfahren und zur Fahrdynamikregelung. Das Aggregat 10 weist einen Hydraulikblock 12 auf, an dessen einer Seite ein Elektromotor 14 angeschraubt und an dessen gegenüberliegender Seite ein kappenförmiges, in Draufsicht näherungsweise rechteckiges, elektronisches Steuergerät 16 angebracht ist. In den Hydraulikblock 12 sind beispielsweise Magnetventile 18 eingesetzt, von denen in Figur 1 lediglich Magnetspulen und aus diesen hervorstehende Ventildome sichtbar sind. Des weiteren ist im Hydraulikblock 12 eine Kolbenpumpe 20 mit zwei Kolben untergebracht, die in Bezug auf eine Motorwelle 22 des Elektromotors 14 einander gegenüberliegend, also in Boxeranordnung angeordnet sind. Die Kolben der Kolbenpumpe 20 sind an sich in einer Ebene senkrecht zur Zeichenebene im Hydaulikblock 12 angeordnet. Der Darstellbarkeit wegen ist in Figur 1 einer der beiden Kolben der Kolbenpumpe 20 in einer um 90 ° um die Motorwelle 22 gedrehten Darstellung gezeichnet, der Kolben ist in Figur 1 in die Zeichenebene gedreht worden. Der Antrieb der Kolbenpumpe 20 erfolgt in an sich bekannter Weise über einen Exzenter 24, der im dargestellten Ausführungsbeispiel einstückig mit der Motorwelle 22 ist. Zu sehen ist in Figur 1 noch ein drehfest auf die Motorwelle 22 aufgesetzer Kollektorring 26, sowie ein Teil einer Ankerwicklung 28. Der Elektromotor 14 weist einen hohlzylindrischen Kragen 32 an einer am Hydraulikblock 12 anliegenden Stirnwand 30 auf, wobei der Elektromotor 14 mit dem Kragen 32 passgenau in eine komplementäre Ansenkung im Hydraulikblock 12 eingreift und dadurch am Hydraulikblock 12 positioniert ist.

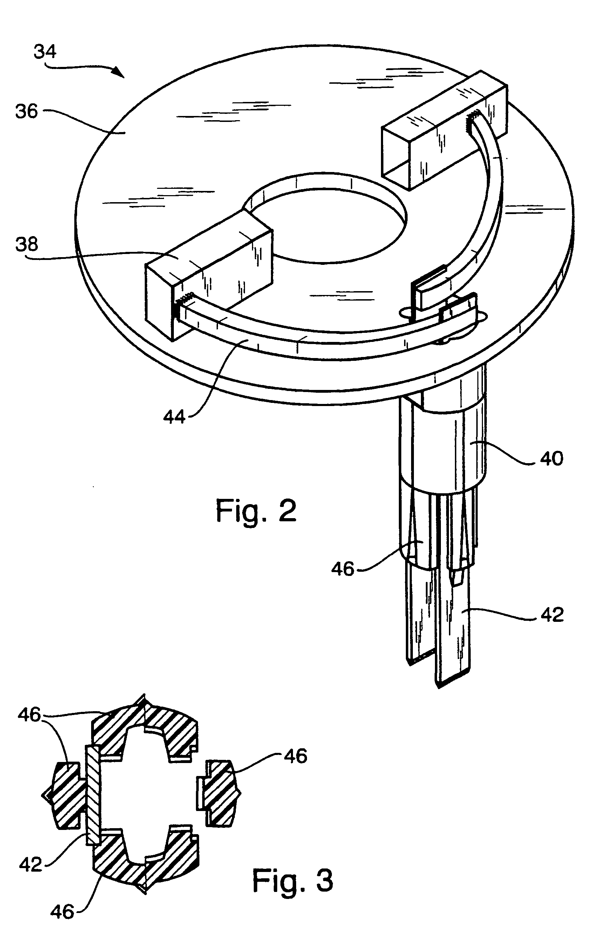

Auf einer Innenseite der am Hydraulikblock 12 anliegenden Stirnwand 30 des Elektromotors 14 ist ein Bürstenträger 34 angeordnet, der in Figur 2 als Einzelteil dargestellt ist. Der Bürstenträger 34 weist eine kreisrunde Lochscheibe 36 aus Kunststoff auf, auf der einander gegenüberliegend zwei Köcher 38 angebracht sind. Die Köcher 38 bestehen aus Blech, sie weisen eine Rechteckrohrform auf und sind an ihren äußeren Stirnseiten verschlossen. In die Köcher 38 sind in an sich bekannter Weise federbelastete, nicht dargestellte Kohlen als Bürsten einsetzbar, die von ihren Federn gegen den Kommutator 26 des Elektromotors 14 gedrückt werden und in an sich bekannter Weise der Stromübertragung auf den Anker 28 des Elektromotors 14 dienen.

Von einer den Köchern abgewandten Seite der Lochscheibe 36 des Bürstenträgers 34 steht ein mit der Lochscheibe 36 einstückiger, rohrförmiger Isolator 40 ab. Der Isolator 40 ist an einer Stelle der Lochscheibe 36 nahe deren Außenrand angeordnet. Im Isolator 40 sind zwei elektrische Kontakte 42 ausgenommen. Die beiden elektrischen Kontakte 42 sind parallel zu einander und mit Abstand von einander angeordnet. Die beiden elektrischen Kontakte 42 sind als Blechstreifen ausgebildet, sie sind sog. Messerkontakte und werden nachfolgend als solche bezeichnet. Die Messerkontakte 42 durchsetzen die Lochscheibe 36 durch ein Loch und sind über viertelkreisbogenförmige Stromschienen 44 elektrisch leitend mit je einem der Köcher 38 bzw. mit den in die Köcher 38 einzusetzenden Bürsten verbunden.

An einem freien, von der Lochscheibe 36 beabstandeten Ende sind an dem rohrförmigen Isolator 40 durch Längsschlitze Spreizzungen 46 ausgebildet. Die Spreizzungen 46 werden von den Messerkontakten 42 auseinander gedrückt, so daß sich der Isolator 40 im Bereich seiner Spreizzungen 46 in Richtung seines freien Endes aufweitet. Die Aufweitung ist in Figur 3 erkennbar, die einen Querschnitt durch den Isolator 40 im Bereich der Spreizzungen 46 darstellt. Dabei ist in Figur 3 in der linken Bildhälfte ein Messerkontakt 42 eingesetzt, wogegen in der rechten Bildhälfte der Messerkontakt noch nicht eingesetzt ist. Wie in Figur 3 erkennbar, sind die Spreizzungen 46 in der linken Bildhälfte vom Messerkontakt 42 auseinandergedrückt, die rechte Bildhälfte von Figur 3 zeigt die Spreizzungen 46 in ihrer nicht auseinandergedrückten, ursprünglichen Lage. Die beiden Messerkontakte 42 drücken alle vier Spreizzungen 46 auseinander. Der Isolator 40 weist ursprünglich, also ohne die Messerkontakte 42, eine geringfügig konische Außenform auf, er verjüngt sich über seine gesamte Länge in Richtung seines freien Endes, so daß er problemlos beispielsweise aus einem Kunststoffspritzgießwerkzeug entformt werden kann, welches ausschließlich in einer Ebene der Lochscheibe 36 des Bürstenträgers 34 geteilt ist, jedoch aufgrund der konischen Form des Isolators 40 im Bereich des Isolators 40 keine Teilung, keinen Schieber oder dgl. benötigt. Die im Isolator 40 aufgenommenen Messerkontakte 42 drücken die Spreizzungen 46 so auseinander, daß sich der Isolator 40 im Bereich seiner Spreizzungen 46 entgegen seiner ursprünglichen Konusform in Richtung seines freien Endes aufweitet, der Isolator 40 weist mit den in ihm aufgenommenen Messerkontakten 42 seinen größten Durchmesser im Bereich seines freien Endes auf. Außerhalb der Spreizzungen 46 liegen die Messerkontakte 42 lose im Isolator 40 ein, die Messerkontakte 42 sind seitlich in allen Richtungen beweglich. Aufgrund seiner Elastizität ist auch der rohrförmige Isolator 40 seitlich in allen Richtungen beweglich.

Beim Anbringen des Elektromotors 14 am Hydraulikblock 12 wird der Isolator 40 mit den in ihm aufgenommenen Messerkontakten 42 durch ein gestuftes, zylindrisches Durchgangsloch 48 im Hydraulikblock 12 durchgesteckt. Ein Durchmesser des Durchgangslochs 48 ist so auf einen Durchmesser des Isolators 40 abgestimmt, daß der Isolator 40 im Bereich seines aufgeweiteten, freien Endes spielfrei im Durchgangsloch 48 anliegt und auf seiner übrigen Länge Spiel aufweist. Auf diese Weise wird der Isolator 40 zusammen mit den in ihm einliegenden Messerkontakten 42 an seiner dem Elektromotor 14 abgewandten Austrittsstelle aus dem Durchgangsloch 48, also auf der dem elektronischen Steuergerät 16 zugewandten Seite des Hydraulikblocks 12 genau am Hydraulikblock 12 positioniert. Herstellungs- und Montagetoleranzen des Elektromotors 14 einschließlich seines Bürstenträgers 34 beeinflussen die Genauigkeit der Positionierung der Messerkontakte 42 und des Isolators 40 auf der dem elektronischen Steuergerät 16 zugewandten Seite des Hydraulikblocks 12 nicht.

Das elektronische Steuergerät 16, das mit Kunststoff umspritzt ist, weist ein Steckergehäuse 50 auf, das mit dem Kunststoff des Steuergeräts 16 einstückig und das dem Hydraulikblock 12 zugewandt ist. Im Steckergehäuse 50 liegen als Gegenkontakte der Messerkontakte 42 von einander isoliert zwei Steckbuchsen 52 ein, in die die Messerkontakte 42 gesteckt sind. Über rechtwinklig abgewinkelte Anschlußfahnen 54 sind die Steckbuchsen 52 elektrisch leitend mit Leiterbahnen 56 eines Stanzgitters durch Punktschweißen verbunden. Das Stanzgitter mit den Leiterbahnen 56 ist in den Kunststoff des elektronischen Steuergeräts 16, das im Übrigen nicht sichtbar ist, eingegossen. Sowohl das Steckergehäuse 50 als auch die Messerkontakte 42 weisen Einführschrägen 58, 60 auf, die das Einstecken der Messerkontakte 42 des Elektromotors 14 in die Steckbuchsen 52 des elektronischen Steuergeräts 16 erleichtern. Das elektronische Steuergerät 16 weist Rastnasen 62 auf, mit denen es mit dem Hydraulikblock 12 verrastet ist.

Die Anbringung des elektonischen Steuergeräts 16 erfolgt durch einfaches Aufsetzen des elektronischen Steuergeräts 16 auf den Hydraulikblock 12, wobei die Rastnasen 62 des elektronischen Steuergeräts 16 am Hydraulikblock 12 einrasten. Da die Messerkontakte 42 des Elektromotors 14 aufgrund der von den Messerkontakten 42 auseinandergedrückten Spreizzungen 46 des Isolators 40 auf der dem elektronischen Steuergeräts 16 zugewandten Seite des Hydraulikblocks 12 genau positioniert sind, ist das Aufsetzten des elektronischen Steuergeräts 16 auf den Hydraulikblock 12 problemlos möglich und es ist sichergestellt, daß die Messerkontakte 42 beim Aufsetzen des elektronischen Steuergeräts 16 auf den Hydraulikblock 12 wie vorgesehen in die Steckbuchsen 52 des elektronischen Steuergeräts 16 gelangen, so daß der Elektromotor 14 elektrisch an das elektronische Steuergerät 16 angeschlossen ist. Durch die genaue Positionierung der Messerkontakte 42 auf der dem elektronischen Steuergerät 16 zugewandten Seite des Hydraulikblocks 12 eignet sich das erfindungsgemäße, elektrohydraulische Aggregat 10 für eine automatisierte Montage oder jedenfalls für ein automatisiertes Aufsetzen des elektronischen Steuergeräts 16 auf den Hydraulikblock 12.

Die Steckbuchsen 52 sind so ausgebildet, daß ein Durchstecken der Messerkontakte 42 möglich ist, eine Einstecktiefe der Messerkontakte 42 wird von den Steckbuchsen 52 nicht begrenzt. Dadurch ist ein Abstand vom Elektromotor 14 zum elektronischen Steuergerät 16 variabel, eine Anbringung des Elektromotors 14 mit unveränderter Länge des Isolators 14 und unveränderter Länge der Messerkontakte 42 an Hydraulikblöcken 12 unterschliedlicher Dicke und elektronischen Steuergeräten 16 unterschiedlicher Höhe ist dadurch möglich.

In dem Bereich, in dem der Isolator 40 einstückig in die Lochscheibe 36 des Bürstenhalters 34 übergeht, weist der Isolator 40 zwei im Querschnitt halbkreisförmige Längsrippen 64 auf, die nach außen abstehen und in einem Abschnitt 66 des gestuften Durchgangslochs 48 im Hydraulikblock 12 einliegen, der einen größeren Durchmesser aufweist. Die Längsrippen 64 befinden sich auf der Außenseite des Isolators 40 und sind in Figur 1 mit einer Strichlinie angedeutet dargestellt. Die Längsrippen 64 des Isolators 40 stellen eine lagerichtige Anordnung des Isolators 40 im Hydraulikblock 12 sicher.

## Patentansprüche

1. Elektrohydraulisches Aggregat (10) zur Regelung eines Bremsdrucks einer hydraulischen Fahrzeugbremsanlage, mit einem eine Hydropumpe (20) aufweisenden Hydraulikblock (12), an dem ein Elektromotor (14) zum Antrieb der Hydraulikpumpe (20) angebracht ist, mit einem elektronischen Steuergerät (16), das auf einer dem Elektromotor gegenüberliegenden Seite des Hydraulikblocks (12) angebracht ist, und mit mindestens einem elektrischen Kontakt (42), der den Elektromotor (14) elektrisch leitend mit dem elektronischen Steuergerät (16) verbindet, wobei der elektrische Kontakt (42) in einem stabförmigen Isolator (40) aufgenommen ist und wobei der Isolator (40) mit dem elektrischen Kontakt (42) durch ein Durchgangsloch (48) im Hydraulikblock (12) durchgeführt ist, das von der Seite des Hydraulikblocks, an der der Elektromotor angebracht ist, zu der Seite des Hydraulikblocks (12), an der das elektronische Steuergerät (16) angebracht ist, durch den Hydraulikblock (12) hindurchgeht, wobei der Isolator (40) und der elektrische Kontakt (42) zumindest teilweise in seitlicher Richtung beweglich sind, und bei dem der elektrische Kontakt als Messerkontakt (42) ausgebildet ist, der mit beiden Enden aus dem Isolator (40) herausragt, **dadurch gekennzeichnet, dass** der Isolator (40) nur über einen Teil seiner Länge aufweitbar ist, wozu er in Richtung eines freien Endes liegende Spreizzungen (46) aufweist, die von dem elektrischen Kontakt (42) auseinanderdrückbar sind und dass der Isolator (40) vom elektrischen Kontakt (42) so aufgeweitet wird, dass er im Bereich seiner Spreizzungen (46) spielfrei im Durchgangsloch (48) des Hydraulikblocks (12) anliegt.

2. Elektrohydraulisches Aggregat nach Anspruch 1, **dadurch gekennzeichnet, dass** sich der Isolator (40) in nicht aufgeweitetem Zustand in Richtung eines freien Endes verjüngt, und dass sich der Isolator (40) im Bereich seiner Aufweitung durch den elektrischen Kontakt (42) in einer Gegenrichtung zur Richtung seiner Verjüngung aufweitet.

3. Elektrohydraulisches Aggregat nach Anspruch 1, **dadurch gekennzeichnet, dass** der Isolator (40) rohrförmig ausgebildet ist.

4. Elektrohydraulisches Aggregat nach einem der Ansprüche 1 bis 3, **dadurch gekennzeichnet, dass** in dem Isolator (40) zwei oder mehr elektrische Kontakte (42) aufgenommen sind.

5. Elektrohydraulisches Aggregat nach Anspruch 4, **dadurch gekennzeichnet, dass** der Isolator (40) konisch ist.

6. Elektrohydraulisches Aggregat nach einem oder mehreren der Ansprüche 1 bis 5, **dadurch gekennzeichnet, dass** der elektrische Kontakt (42) in dem Bereich des Isolators (40), den der elektrische Kontakt (42) aufweitet, spielfrei im Isolator (40) gehalten ist und dass der elektrische Kontakt (42) außerhalb des Bereichs des Isolators (40), den der elektrische Kontakt (42) aufweitet, seitliches Spiel im Isolator (40) aufweist.

7. Elektrohydraulisches Aggregat nach Anspruch 1, **dadurch gekennzeichnet, dass** der elektrische Kontakt (42) durch einen Gegenkontakt (52) durchgesteckt oder an dem Gegenkontakt elektrisch leitend anliegend entlang geführt ist.

8. Elektrohydraulisches Aggregat nach einem der Ansprüche 1 bis 7, **dadurch gekennzeichnet, dass** der Isolator (40) und der elektrische Kontakt (42) fest mit dem Elektromotor (14) verbunden sind.

## Claims

1. Electrohydraulic assembly (10) for regulating a brake pressure of a hydraulic vehicle brake system, with a hydraulic block (12) which has a hydraulic pump (20) and on which an electric motor (14) for driving the hydraulic pump (20) is mounted, with an electronic control apparatus (16) which is mounted on a side of the hydraulic block (12) which is located opposite the electric motor, and with at least one electrical contact (42) which connects the electric motor (14) electrically conductively to the electronic control apparatus (16), the electrical contact (42) being received in a bar-shaped insulator (40), and the insulator (40), together with the electrical contact (42), being led, in the hydraulic block (12), through a through-hole (48) which passes through the hydraulic block (12) from that side of the hydraulic block on which the electric motor is mounted to that side of the hydraulic block (12) on which the electronic control apparatus (16) is mounted, the insulator (40) and the electrical contact (42) being moveable at least partially in a lateral direction, and in which the electrical contact is designed as a knife contact (42) which projects with both ends out of the insulator (40), **characterized in that** the insulator (40) is expandable only over part of its length, for which purpose it has spreading tongues (46) which lie in the direction of a free end and which can be pressed apart from one another by the electrical contact (42), and **in that** the insulator (40) is expanded by the electrical contact (42) in such a way that the said insulator comes to bear, free of play, in the region of its spreading tongues (46), in the through-hole (48) of the hydraulic block (12).

2. Electrohydraulic assembly according to Claim 1, **characterized in that**, in the non-expanded state, the insulator (40) narrows in the direction of a free end, and **in that**, in the region of its expansion by the electrical contact (42), the insulator (40) expands in an opposite direction to the direction of its narrowing.

3. Electrohydraulic assembly according to Claim 1, **characterized in that** the insulator (40) is of tubular design.

4. Electrohydraulic assembly according to one of Claims 1 to 3, **characterized in that** two or more electrical contacts (42) are received in the insulator (40).

5. Electrohydraulic assembly according to Claim 4, **characterized in that** the insulator (40) is conical.

6. Electrohydraulic assembly according to one or more of Claims 1 to 5, **characterized in that** the electrical contact (42) is held, free of play, in the insulator (40) **in that** region of the insulator (40) which the electrical contact (42) expands, and **in that** the electrical contact (42) has lateral play in the insulator (40) outside that region of the insulator (40) which the electrical contact (42) expands.

7. Electrohydraulic assembly according to Claim 1, **characterized in that** the electrical contact (42) is plugged through a countercontact (52) or is led along the countercontact so as to come to bear electrically conductively against the latter.

8. Electrohydraulic assembly according to one of Claims 1 to 7, **characterized in that** the insulator (40) and the electrical contact (42) are connected fixedly to the electric motor (14).

## Revendications

1. Unité électrohydraulique (10) pour la régulation de la pression de freinage d'un système de freinage hydraulique de véhicule, comprenant un bloc hydraulique (12) avec une pompe hydraulique (20) et sur lequel est monté un moteur électrique (14) d'entraînement de la pompe (20), un appareil électronique de commande (16) monté sur le moteur électrique du côté opposé au bloc hydraulique (12) et au moins un contact électrique (42) qui met le moteur (14) en liaison électrique avec l'appareil électronique de commande (16), et qui est logé dans un isolateur (40) en forme de barre qui traverse, avec le contact électrique (42), un trou de passage (48) prévu dans le bloc hydraulique (12), qu'il traverse en reliant le côté de ce bloc sur lequel est monté le moteur au côté du bloc hydraulique (12) sur lequel est monté l'appareil de commande (16), l'isolateur (40) et le contact électrique (42) étant mobiles au moins partiellement en direction latérale, et le contact électrique ayant la forme d'un contact à couteau (42) dont les deux extrémités dépassent l'isolateur (40),
**caractérisée en ce que**
l'isolateur (40) peut être élargi seulement sur une partie de sa longueur, et pour cela il présente des languettes d'expansion (46) situées en direction d'une extrémité libre et qui peuvent s'écarter l'une de l'autre par l'action du contact électrique (42), l'isolateur (40) étant écarté du contact électrique (42) de manière que, dans la zone de ces languettes d'expansion (46), il se trouve sans jeu dans le trou de passage (48) du bloc hydraulique.

2. Unité électrohydraulique selon la revendication 1,
**caractérisée en ce que**
l'isolateur (40), dans son état non élargi, va en se rétrécissant en direction d'une extrémité libre, tandis que dans la zone de son élargissement produite par le contact électrique (42), il s'élargit dans le sens opposé à celui de son rétrécissement.

3. Unité électrohydraulique selon la revendication 1,
**caractérisée en ce que**
l'isolateur (40) a la forme d'un tube.

4. Unité électrohydraulique selon une des revendications 1 à 3,
**caractérisée en ce que**
dans l'isolateur (40) sont logés deux (ou plus) contacts électriques.

5. Unité électrohydraulique selon la revendication 4,
**caractérisée en ce que**
l'isolateur (40) est conique.

6. Unité électrohydraulique selon une ou plusieurs des revendications 1 à 5,
**caractérisée en ce que**
le contact électrique (42), dans la zone de l'isolateur (40) élargie par le contact électrique (42), est monté sans jeu dans l'isolateur (40), et ce contact, en dehors de la zone de l'isolateur élargie par le contact électrique (42), présente un jeu latéral dans l'isolateur (40).

7. Unité électrohydraulique selon la revendication 1,
**caractérisée en ce que**
le contact électrique (42) est enfiché dans un contre-contact (52) où il est guidé avec liaison conductrice le long de ce contre-contact électrique.

8. Unité électrohydraulique selon une des revendications 1 à 7,
**caractérisée en ce que**
l'isolateur (40) et le contact électrique (42) sont solidaires du moteur électrique (14).
